# EUROPÄISCHE PATENTSCHRIFT

(11) **EP 4 337 876 B1**
(45) Veröffentlichungstag und Bekanntmachung des Hinweises auf die Patenterteilung: **11.06.2025**
(21) Anmeldenummer: 22723545.4
(22) Anmeldetag: 19.04.2022
(51) Int. Cl.: F16D 55/00, F16D 63/00

(54) **BREMSANORDNUNG, AUFWEISEND EINE BREMSE, EINEN ADAPTER UND EIN GETRIEBE**
BRAKE ARRANGEMENT COMPRISING A BRAKE, AN ADAPTER AND A GEAR
AGENCEMENT DE FREIN AVEC UN FREIN, UN ADAPTATEUR ET UN ENGRENAGE

(30) Priorität: 12.05.2021 CN 202110517160; 12.01.2022 DE 102022000114
(43) Veröffentlichungstag der Anmeldung: 20.03.2024
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2022/025155
(87) Internationale Veröffentlichungsnummer: WO 2022/237999

(56) Entgegenhaltungen:
- CN-A- 101 823 433
- CN-U- 202 441 770
- FR-A1- 2 709 119
- US-A- 4 377 094
- US-A- 5 603 395

## Beschreibung

Die Erfindung betrifft eine Bremsanordnung, aufweisend eine Bremse, einen Adapter und ein Getriebe.

Es ist allgemein bekannt, dass eine Bremse ein Bremsmoment an eine Welle überträgt.

**Aus der** US 5 603 395 A **ist als nächstliegender Stand der Technik eine Bremsanordnung bekannt.**

**Aus der** US 4 377 094 A **ist eine flüssigkeitsgekühlte Scheibenbremse bekannt.**

**Aus der** CN 202 441 770 U **ist eine Bremsanordnung bekannt.**

**Aus der** FR 2 709 119 A1 **ist eine Traktionsmaschine bekannt.**

**Aus der** CN 101 823 433 A **ist eine Bremsanordnung bekannt.**

Der Erfindung liegt daher die Aufgabe zugrunde, eine Bremsanordnung möglichst kompakt auszubilden.

Erfindungsgemäß wird die Aufgabe bei der Bremsanordnung nach den in Anspruch 1 angegebenen Merkmalen gelöst.

Wichtige Merkmale der Erfindung bei der Bremsanordnung, aufweisend eine Bremse, einen Adapter und ein Getriebe, sind, dass der Adapter ein Adaptergehäuse aufweist, das mit einem Gehäuseteil des Getriebes verbunden ist,
wobei ein Flanschteil der Bremse auf der vom Getriebe abgewandten Seite des Adaptergehäuses mit dem Adaptergehäuse verbunden ist,
wobei ein Haubenteil der Bremse mit dem Flanschteil verbunden ist,
wobei im Adaptergehäuse mindestens ein Lager zur drehbaren Lagerung der eintreibenden Welle des Getriebes aufgenommen ist.
Von Vorteil ist dabei, dass eine Bremse über einen Adapter an ein Getriebe angebaut ist und somit das Bremsmoment durch das Getriebe vergrößert wird.

Bei einer vorteilhaften Ausgestaltung ist ein erstes Verzahnteil mit der eintreibenden Welle des Getriebes drehfest verbunden,
wobei das erste Verzahnteil im Eingriff ist mit einem weiteren Verzahnteil des Getriebes. Von Vorteil ist dabei, dass die von der Bremse abgebremste Welle direkt als eintreibende Welle des Getriebes fungiert.

Bei einer vorteilhaften Ausgestaltung führt das Haubenteil zusammen mit dem Flanschteil Gehäusefunktion für die Bremse aus und/oder ist gehäusebildend und/oder bildet das Gehäuse. Von Vorteil ist dabei, dass die Bremse geschützt am Getriebe anbringbar ist.

Bei einer vorteilhaften Ausgestaltung ist ein Mitnehmer mit der Welle drehfest verbunden,
wobei ein Bremsbelagträger mit dem Mitnehmer drehfest verbunden und axial relativ zum Magnetkörper bewegbar ist, insbesondere hin- und herbewegbar ist,
wobei ein Magnetkörper der Bremse drehfest mit dem Flanschteil verbunden ist,
wobei im Magnetkörper eine bestrombare Spule aufgenommen ist,
wobei eine Ankerscheibe axial zwischen dem Bremsbelagträger und dem Magnetkörper angeordnet ist, insbesondere hin- und herbewegbar ist,
wobei die Ankerscheibe drehfest mit dem Magnetkörper verbunden ist und axial relativ zum Magnetkörper bewegbar angeordnet ist, insbesondere mittels durch Ausnehmungen der Ankerscheibe hindurchragender, am Magnetkörper befestigter Bolzen,
wobei am Magnetkörper abgestützte Federelemente auf die Ankerscheibe drücken. Von Vorteil ist dabei, dass bei Stromausfall die Bremse einfällt und somit eine erhöhte Sicherheit erreichbar ist. Bei Bestromung der Bremse überwindet die von der Spule mit dem Magnetkörper erzeugte Magnetkraft die von den Federelementen erzeugte Federkraft betragsmäßig und die Ankerscheibe wird zum Magnetkörper hingezogen, so dass die Bremse gelüftet wird.

**Erfindungsgemäß** ist am Flanschteil eine Bremsfläche ausgebildet, insbesondere feinbearbeitet ausgebildet ist. Von Vorteil ist dabei, dass die Reibwärme der Bremse an ein Gehäuseteil abgegeben wird.

Bei einer vorteilhaften Ausgestaltung ragt die Welle durch den Magnetkörper hindurch. Von Vorteil ist dabei, dass auf dem vom Adaptergehäuse abgewandten Endbereich der Welle ein Winkelsensor innerhalb des Haubenteils anschließbar und/oder anordenbar ist.

Bei einer vorteilhaften Ausgestaltung ist die Bremse direkt über den Adapter mit dem Getriebe verbunden, insbesondere ist also kein Motor oder Elektromotor zwischengeordnet. Von Vorteil ist dabei, dass die Bremse sehr klein ausführbar ist, weil das Getriebe das Bremsmoment in ein größeres Bremsmoment übersetzt.

Bei einer vorteilhaften Ausgestaltung ist an der Außenseite des Haubenteils ein Anschlusskasten befestigt, zu dem die Versorgungsleitungen der Bremse, insbesondere der Spule, herausgeführt sind. Von Vorteil ist dabei, dass ein Anschluss der Bremse einfach zugänglich und ausführbar ist.

Bei einer vorteilhaften Ausgestaltung zentriert das im Adaptergehäuse aufgenommene Lager zwei das Adaptergehäuse bildende Teile des Adaptergehäuses zueinander,
wobei eines der Teile mit dem Flanschteil verbunden ist, welches eine oder die Bremsfläche der Bremse aufweist. Von Vorteil ist dabei, dass die Zentrierung über das Lager und somit auch relativ zur Welle wirkt.

Bei einer vorteilhaften Ausgestaltung weist das Adaptergehäuse einen quaderförmigen Bereich auf. Von Vorteil ist dabei, dass eine hohe Torsionssteifigkeit erreichbar ist. Somit ist ein hohes Bremsmoment rückführbar.

Wichtige Merkmale bei dem Regalbediengerät mit einer Bremsanordnung sind, dass ein als zur seitlichen Führung fungierendes Rad, insbesondere Führungsrad, drehfest mit der abtreibenden Welle des Getriebes verbunden ist.

Von Vorteil ist dabei, dass keine separate Radachse notwendig ist, sondern die abtreibende Welle des Getriebes direkt mit dem Rad drehfest verbindbar ist.

Bei einer vorteilhaften Ausgestaltung ist das Rad an der Oberseite eines Rahmens des Regalbediengeräts angeordnet. Von Vorteil ist dabei, dass sowohl der an der Unterseite angeordnete, eine weitere Bremse aufweisende Antrieb als auch ein an der Oberseite angeordnete Führungsrad mit einem Bremsmoment beaufschlagbar ist.

Bei einer vorteilhaften Ausgestaltung ist ein von einem elektrischen Antrieb angetriebenes Antriebsrad an der Unterseite des Rahmens des Regalbediengeräts angeordnet,
insbesondere wobei das Antriebsrad als Schienenrad ausgeführt ist. Von Vorteil ist dabei, dass der Antrieb bodennah erfolgt. Dabei ist der Antrieb auch mit einer weiteren Bremse ausgestattet, so dass eine Bremsung statt einer Beschleunigung ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

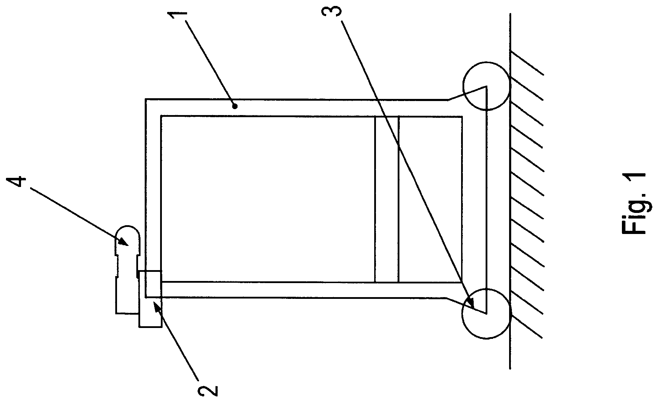

In der Figur 1 ist ein Regalbediengerät in Draufsicht dargestellt, das eine Bremsanordnung 4 aufweist.

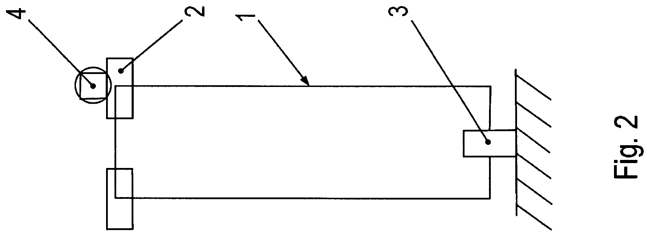

In der Figur 2 ist Regalbediengerät in Seitenansicht dargestellt.

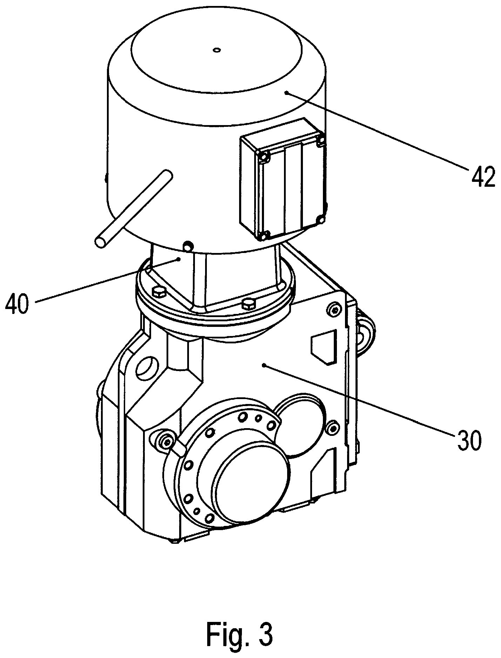

In der Figur 3 ist die Bremsanordnung in Schrägansicht dargestellt.

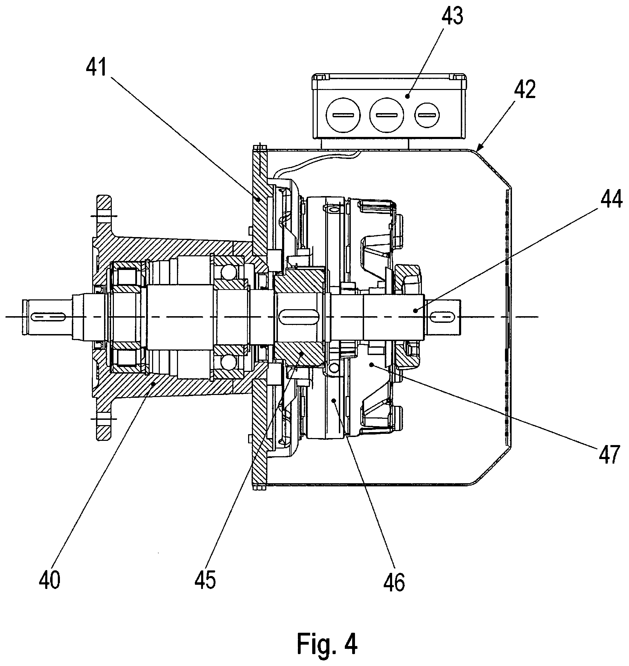

In der Figur 4 ist ein Querschnitt durch einen Bereich der Bremsanordnung 4 dargestellt.

Wie in den Figuren gezeigt weist sind am Rahmen 1 des Regalbediengeräts an der Unterseite ein Antriebsrad 3 und an der Oberseite des Regalbediengeräts ein Rad 2, das mittels der Bremsanordnung abbremsbar ist angeordnet.

Vorzugsweise ist das Antriebsrad 3 als Schienenrad ausgeführt und rollt auf einer am Boden der das Regalbediengerät umfassenden Anlage angeordneten Schiene ab.

An der Oberseite des Rahmens 1 sind zur seitlichen Führung Räder 2 angeordnet, wobei zumindest eines der Räder 2 von der Bremsanordnung abbremsbar ist.

Hierfür ist dieses Rad 2 drehfest verbunden mit einer Abtriebswelle eines Getriebes 30 der Bremsanordnung 4. Vorzugsweise ist das Rad 2 auf die Abtriebswelle aufgesteckt und dabei drehfest verbunden ist, insbesondere mittels Passfederverbindung.

Die eintreibende Welle 44 des Getriebes weist einen kleineren Durchmesser auf als die abtreibende Welle des Getriebes, da die eintreibende Welle 44 mit einem kleineren Drehmoment beaufschlagt wird.

Das Getriebe 30 ist als Winkelgetriebe ausgeführt, so dass die eintreibende Welle 44 senkrecht zur abtreibenden Welle ausgerichtet ist.

Statt eines das Getriebe 30 antreibenden Elektromotors ist erfindungsgemäß eine elektromagnetisch betätigbare Bremse vorgesehen, die über einen Adapter mit dem Getriebe 30 verbunden ist.

Hierzu weist der Adapter ein Adaptergehäuse 40 auf, das mit einem Gehäuseteil, insbesondere Flansch, des Getriebes 30 verbunden ist, insbesondere mittels Schrauben. Auf der vom Getriebe 30 abgewandten Seite des Adaptergehäuses 40 ist ein Flanschteil 41 mit dem Adaptergehäuse 40 verbunden.

Das Adaptergehäuse 40 ist zweiteilig ausgeführt und nimmt ein Lager zur drehbaren Lagerung der Welle 44 auf. Dabei ist das Lager sowohl im ersten als auch im zweiten Teil des Adaptergehäuses 40 aufgenommen und zentriert somit die beiden Teile zueinander. Mit einem der beiden Teile ist das Flanschteil 41 verbunden.

Die Bremse ist von einer Haube 42 umgeben, die mit dem Flanschteil 41 verbunden ist und somit ein Gehäuse für die Bremse darstellt. Ein Anschlusskasten 43 ist auf der Außenseite der Haube 42 befestigt, zu dem die elektrischen Versorgungsleitungen einer Spule der Bremse herausgeführt sind.

Die Spule ist somit bestrombar.

Die Bremse weist einen Magnetkörper 47 aus ferromagnetischem Material auf, welcher mit dem Flanschteil 41 drehfest verbunden ist.

Im Magnetkörper 47 ist eine ringförmige Vertiefung ausgeführt, in welcher die als Ringspule ausgeformte Spule aufgenommen ist.

Die Welle 44 ragt durch den Magnetkörper 47 hindurch.

Zwischen dem Magnetkörper 47 und dem Flanschteil 41 ist eine ferromagnetisch ausgeführte Ankerscheibe 46 angeordnet, die drehfest mit dem Magnetkörper 47 verbunden ist, aber axial, also parallel zur Richtung der Drehachse der Welle 44, hin- und herbewegbar ist.

Am Magnetkörper 47 abgestützte Federelemente drücken auf die Ankerscheibe 46. Somit wird die Ankerscheibe 46 bei Bestromung der Spule entgegen der von den Federelementen erzeugten Federkraft zum Magnetkörper 47 hingezogen.

Mit der Welle 44 ist ein ringförmiger Mitnehmer45 drehfest verbunden, insbesondere mittels Passfederverbindung. Der Mitnehmer 45 weist eine Außenverzahnung auf. Ein scheibenförmiger Bremsbelagträger ist auf den Mitnehmer 45 aufgesteckt und weist eine Innenverzahnung auf, die mit der Außenverzahnung im Eingriff ist.

Somit ist der Bremsbelagträger drehfest mit der Welle 44 verbunden, aber axial hin- und herbewegbar. Der Bremsbelagträger ist zwischen dem Flanschteil 41 und der Ankerscheibe 46 angeordnet und weist vorzugsweise axial beidseitig Bremsbeläge auf.

Wird nun die Spule nicht bestromt, drücken die Federelemente die Ankerscheibe 46 auf den Bremsbelagträger, der somit zum Flanschteil 41 hin, insbesondere auf eine als Bremsfläche fungierende fein bearbeitete Oberfläche des Flanschteils 41. Somit fällt die Bremse ein, erzeugt ein Bremsmoment und ermöglicht dem Getriebe 30, dieses Bremsmoment gemäß der Übersetzung des Getriebes 30 zur abtreibenden Welle hin zu verstärken.

Vorzugsweise ist das Regalbediengerät als Schienenfahrzeug ausgeführt.

Bei weiteren erfindungsgemäßen Ausführungsbeispielen wird das Getriebe 30 als Stirnradgetriebe ausgeführt, insbesondere also als Parallelwellengetriebe.

Bei weiteren erfindungsgemäßen Ausführungsbeispielen ist am aus dem Magnetkörper 47 herausragenden Endbereich der Welle 44 ein Winkelsensor anordenbar zur Erfassung der Winkellage der Welle 44.

### Bezugszeichenliste

1 Rahmen des Regalbediengeräts
2 Rad
3 Antriebsrad
4 Bremsanordnung
30 Getriebe
40 Adaptergehäuse
41 Flanschteil
42 Haubenteil
43 Anschlusskasten
44 Welle
45 Mitnehmer
46 Ankerscheibe
47 Magnetkörper, insbesondere Spulenkern

## Patentansprüche

1. Bremsanordnung, aufweisend eine Bremse, einen Adapter und ein Getriebe (30),
wobei der Adapter ein Adaptergehäuse (40) aufweist, das mit einem Gehäuseteil des Getriebes (30) verbunden ist,
wobei ein Flanschteil (41) der Bremse auf der vom Getriebe abgewandten Seite des Adaptergehäuses (40) mit dem Adaptergehäuse verbunden ist,
wobei ein Haubenteil (42) der Bremse mit dem Flanschteil (41) verbunden ist,
wobei im Adaptergehäuse (40) mindestens ein Lager zur drehbaren Lagerung der eintreibenden Welle (44) des Getriebes aufgenommen ist,
**dadurch gekennzeichnet, dass**
**am Flanschteil** (41) **eine Bremsfläche ausgebildet ist, insbesondere feinbearbeitet ausgebildet ist.**

2. Bremsanordnung nach Anspruch 1,
**dadurch gekennzeichnet, dass**
ein erstes Verzahnteil mit der eintreibenden Welle des Getriebes (30) drehfest verbunden ist
wobei das erste Verzahnteil im Eingriff mit einem weiteren Verzahnteil des Getriebes (30) ist.

3. Bremsanordnung nach einem der vorangegangenen Ansprüche,
**dadurch gekennzeichnet, dass**
das Haubenteil (42) zusammen mit dem Flanschte (41) Gehäusefunktion für die Bremse ausführt und/oder gehäusebildend ist und/oder das Gehäuse bildet.

4. Bremsanordnung nach einem der vorangegangenen Ansprüche,
**dadurch gekennzeichnet, dass**
ein Mitnehmer (45) mit der Welle (44) drehfest verbunden ist, wobei ein Bremsbelagträger mit dem Mitnehmer (45) drehfest verbunden und axial relativ zum Magnetkörper (47) bewegbar ist, insbesondere hin- und herbewegbar ist, wobei ein Magnetkörper (47) der Bremse drehfest mit dem Flanschteil (41) verbunden ist,
wobei im Magnetkörper eine bestrombare Spule aufgenommen ist,
wobei eine Ankerscheibe (46) axial zwischen dem Bremsbelagträger und dem Magnetkörper angeordnet ist, insbesondere hin- und herbewegbar ist,
wobei die Ankerscheibe drehfest mit dem Magnetkörper (47) verbunden ist und axial relativ zum Magnetkörper (47) bewegbar angeordnet ist, insbesondere mittels durch Ausnehmungen der Ankerscheibe hindurchragender, am Magnetkörper befestigter Bolzen,
wobei am Magnetkörper abgestützte Federelemente auf die Ankerscheibe (46) drücken.

5. Bremsanordnung **nach Anspruch 4,**
**dadurch gekennzeichnet, dass**
die Welle (44) durch den Magnetkörper (46) hindurchragt, insbesondere wobei auf dem vom Adaptergehäuse (40) abgewandten Endbereich der Welle ein Winkelsensor zur Erfassung der Winkellage der Welle innerhalb des Haubenteils anschließbar und/oder anordenbar ist,
insbesondere wobei eine Sensorwelle des Winkelsensors drehfest mit der Welle verbunden ist und ein Gehäuse des Winkelsensors mit dem Magnetkörper (46) verbunden ist und/oder mit dem Haubenteil verbunden ist.

6. Bremsanordnung nach einem der vorangegangenen Ansprüche,
**dadurch gekennzeichnet, dass**
die Bremse direkt über den Adapter mit dem Getriebe (30) verbunden ist, insbesondere also kein Motor oder Elektromotor zwischengeordnet ist.

7. Bremsanordnung nach einem der vorangegangenen Ansprüche,
**dadurch gekennzeichnet, dass**
an der Außenseite des Haubenteils (42) ein Anschlusskasten (43) befestigt ist, zu dem die Versorgungsleitungen der Bremse, insbesondere der Spule, herausgeführt sind.

8. Bremsanordnung nach einem der vorangegangenen Ansprüche,
**dadurch gekennzeichnet, dass**
das im Adaptergehäuse (40) aufgenommene Lager zwei das Adaptergehäuse bildende Teile des Adaptergehäuses zueinander zentriert,
wobei eines der Teile mit dem Flanschteil (41) verbunden ist, welches eine oder die Bremsfläche der Bremse aufweist.

9. Bremsanordnung nach einem der vorangegangenen Ansprüche,
**dadurch gekennzeichnet, dass**
das Adaptergehäuse (40) einen quaderförmigen Bereich aufweist

10. Regalbediengerät mit einer Bremsanordnung nach einem der vorangegangenen Ansprüche,
**dadurch gekennzeichnet, dass**
ein als zur seitlichen Führung fungierendes Rad (2), insbesondere Führungsrad, drehfest mit der abtreibenden Welle des Getriebes (30) verbunden ist.

11. Regalbediengerät nach **Anspruch 10,**
**dadurch gekennzeichnet, dass**
das Rad (2) an der Oberseite eines Rahmens (1) des Regalbediengeräts angeordnet ist.

12. Regalbediengerät nach **Anspruch 10 oder 11,**
**dadurch gekennzeichnet, dass**
ein von einem elektrischen Antrieb angetriebenes Antriebsrad (3) an der Unterseite des Rahmens (1) des Regalbediengeräts angeordnet ist,
insbesondere wobei das Antriebsrad (3) als Schienenrad ausgeführt ist und somit das Regalbediengerät als Schienenfahrzeug ausgeführt ist.

## Claims

1. A brake arrangement having a brake, an adaptor and a gear unit (30),
wherein the adaptor has an adaptor housing (40) which is connected to a housing part of the gear unit (30),
wherein a flange part (41) of the brake is connected to the adaptor housing on that side of the adaptor housing (40) remote from the gear unit,
wherein a cover part (42) of the brake is connected to the flange part (41),
wherein at least one bearing for the rotatable mounting of the input shaft (44) of the gear unit is received in the adaptor housing (40),
**characterised in that**
a braking surface is formed on the flange part (41), in particular is finely machined.

2. A brake arrangement according to claim 1,
**characterised in that**
a first toothed part is connected to the input shaft of the gear unit (30) in a rotationally-fixed manner,
wherein the first toothed part engages a further toothed part of the gear unit (30).

3. A brake arrangement according to any one of the preceding claims,
**characterised in that**
the cover part (42) together with the flange part (41) carries out a housing function for the brake and/or is housing-forming and/or forms the housing.

4. A brake arrangement according to any one of the preceding claims,
**characterised in that**
an entrainer (45) is connected to the shaft (44) in a rotationally-fixed manner,
wherein a brake lining carrier is connected to the entrainer (45) in a rotationally-fixed manner and is movable axially relative to the magnet body (47), in particular is movable to and fro,
wherein a magnet body (47) of the brake is connected to the flange part (41) in a rotationally-fixed manner,
wherein an energisable coil is received in the magnet body,
wherein an armature plate (46) is arranged axially between the brake lining carrier and the magnet body, in particular is movable to and fro,
wherein the armature plate is connected to the magnet body (47) in a rotationally-fixed manner and is arranged in an axially movable manner relative to the magnet body (47), in particular by means of bolts secured to the magnet body and projecting through cutouts of the armature plate,
wherein spring elements supported on the magnet body press onto the armature plate (46).

5. A brake arrangement according to claim 4,
**characterised in that**
the shaft (44) projects through the magnet body (46),
in particular wherein at the shaft end-region remote from the adaptor housing (40), an angle sensor is connectable and/or arrangeable within the cover part in order to detect the angular position of the shaft,
in particular wherein a sensor shaft of the angle sensor is connected to the shaft in a rotationally-fixed manner and a housing of the angle sensor is connected to the magnet body (46) and/or is connected to the cover part.

6. A brake arrangement according to any one of the preceding claims,
**characterised in that**
the brake is connected directly to the gear unit (30) via the adaptor, in particular therefore no motor or electric motor is arranged therebetween.

7. A brake arrangement according to any one of the preceding claims,
**characterised in that**
a terminal box (43) is secured to the exterior of the cover part (42) and the supply lines of the brake, in particular of the coil, are led out to this terminal box.

8. A brake arrangement according to any one of the preceding claims,
**characterised in that**
the bearing received in the adaptor housing (40) centres two parts, forming the adaptor housing, of the adaptor housing with respect to one another,
wherein one of the parts is connected to the flange part (41) which has one or the braking surface of the brake.

9. A brake arrangement according to any one of the preceding claims,
**characterised in that**
the adaptor housing (40) has a cuboid region.

10. A storage and retrieval machine having a brake arrangement according to any one of the preceding claims,
**characterised in that**
a wheel (2) acting as a lateral guide, in a particular a guide wheel, is connected to the output shaft of the gear unit (30) in a rotationally-fixed manner.

11. A storage and retrieval machine according to claim 10,
**characterised in that**
the wheel (2) is arranged at the upper side of a frame (1) of the storage and retrieval machine.

12. A storage and retrieval machine according to claim 10 or 11,
**characterised in that**
a drive wheel (3) driven by an electric drive is arranged at the underside of the frame (1) of the storage and retrieval machine,
in particular wherein the drive wheel (3) is in the form of a rail wheel and consequently the storage and retrieval machine is in the form of a rail vehicle.

## Revendications

1. Système de freinage, comprenant un frein, un adaptateur et une transmission (30), l'adaptateur présentant un carter d'adaptateur (40) relié à une partie carter de la transmission (30),
une partie bride (41) du frein étant reliée au carter d'adaptateur sur le côté du carter d'adaptateur (40) qui se trouve à l'opposé de la boîte de vitesses,
une partie capot (42) du frein étant reliée à la partie bride (41),
au moins un palier (40), qui permet une mise sur palier rotative de l'arbre d'entraînement (44) de la transmission, étant accueilli dans le carter d'adaptateur,
**caractérisé en ce que**
une surface de freinage, en particulier une surface finement usinée, est formée sur la partie bride (41).

2. Système de freinage selon la revendication 1,
**caractérisé en ce que**
une première partie denture est reliée de manière solidaire en rotation à l'arbre d'entraînement de la transmission (30),
la première partie denture étant en prise avec une autre partie denture de la transmission (30).

3. Système de freinage selon l'une quelconque des revendications précédentes, **caractérisé en ce que**
la partie capot (42) remplit, en collaboration avec la partie bride (41), la fonction de carter pour le frein et/ou est constitutive d'un carter et/ou forme le carter.

4. Système de freinage selon l'une quelconque des revendications précédentes, **caractérisé en ce que**
un entraîneur (45) est relié de manière solidaire en rotation à l'arbre (44),
un support de garniture de frein étant relié de manière solidaire en rotation à l'entraîneur (45) et pouvant être déplacé de manière axiale, en particulier pouvant être déplacé en va-et-vient, par rapport au corps magnétique (47),
un corps magnétique (47) du frein étant relié de manière solidaire en rotation à la partie bride (41),
une bobine alimentable étant accueillie dans le corps magnétique,
un disque d'induit (46) étant agencé, en particulier pouvant être déplacé en va-et-vient, axialement entre le support de garniture de frein et le corps magnétique,
le disque d'induit étant relié de manière solidaire en rotation au corps magnétique (47) et étant agencé de manière à pouvoir être déplacé axialement par rapport au corps magnétique (47), en particulier au moyen de boulons fixés au corps magnétique et traversant des évidements du disque d'induit,
des éléments formant ressort appuyés contre le corps magnétique appuyant sur le disque d'induit (46).

5. Système de freinage selon la revendication 4,
**caractérisé en ce que**
l'arbre (44) traverse le corps magnétique (46),
un capteur d'angle qui permet de détecter la position angulaire de l'arbre à l'intérieur de la partie capot pouvant en particulier être raccordé et/ou agencé sur la région d'extrémité de l'arbre qui se trouve à l'opposé du carter d'adaptateur (40),
un arbre de capteur du capteur d'angle étant en particulier relié de manière solidaire en rotation à l'arbre et un carter du capteur d'angle étant en particulier relié au corps magnétique (46) et/ou à la partie capot.

6. Système de freinage selon l'une quelconque des revendications précédentes, **caractérisé en ce que**
le frein est relié directement à la transmission (30) par l'intermédiaire de l'adaptateur, en particulier **en ce qu'**aucun moteur ou moteur électrique n'est interposé.

7. Système de freinage selon l'une quelconque des revendications précédentes, **caractérisé en ce que**
une boîte de raccordement (43), vers laquelle mènent les conduites d'alimentation du frein, en particulier de la bobine, est fixée sur le côté extérieur de la partie capot (42).

8. Système de freinage selon l'une quelconque des revendications précédentes, **caractérisé en ce que**
le palier accueilli dans le carter d'adaptateur (40) centre l'une par rapport à l'autre deux parties du carter d'adaptateur formant le carter d'adaptateur,
l'une des parties étant reliée à la partie bride (41) qui présente une ou la surface de freinage du frein.

9. Système de freinage selon l'une quelconque des revendications précédentes, **caractérisé en ce que**
le carter d'adaptateur (40) présente une région parallélépipédique.

10. Transstockeur comprenant un système de freinage selon l'une quelconque des revendications précédentes,
**caractérisé en ce que**
une roue (2) faisant office de guide latéral, en particulier une roue de guidage, est reliée de manière solidaire en rotation à l'arbre de sortie de la transmission (30).

11. Transstockeur selon la revendication 10,
**caractérisé en ce que**
la roue (2) est agencée sur le côté supérieur d'un châssis (1) du transstockeur.

12. Transstockeur selon la revendication 10 ou 11,
**caractérisé en ce que**
une roue d'entraînement (3) entraînée par un entraînement électrique est agencée sur le côté inférieur du châssis (1) du transstockeur,
la roue d'entraînement (3) étant en particulier mise en œuvre sous la forme d'une roue ferroviaire et le transstockeur étant ainsi mis en œuvre sous la forme d'un véhicule ferroviaire.
